(19) Europäisches Patentamt
European Patent Office
Office européen des brevets

(11) EP 4 383 392 B1

(12) EUROPEAN PATENT SPECIFICATION

(45) Date of publication and mention of the grant of the patent:
**01.04.2026 Bulletin 2026/14**

(21) Application number: **23201858.0**

(22) Date of filing: **05.10.2023**

(51) International Patent Classification (IPC):
***H01M 10/056*** (2010.01) ***H01M 10/0525*** (2010.01)
***H01M 10/0567*** (2010.01) ***H01M 10/0569*** (2010.01)
***H01M 10/0568*** (2010.01)

(52) Cooperative Patent Classification (CPC):
**H01M 10/056; H01M 10/0525; H01M 10/0567; H01M 10/0568; H01M 10/0569;** H01M 2300/0025; Y02E 60/10

# (54) ADDITIVE FOR ELECTROLYTE, ELECTROLYTE FOR RECHARGEABLE LITHIUM BATTERY, AND RECHARGEABLE LITHIUM BATTERY INCLUDING THE SAME

ADDITIV FÜR ELEKTROLYT, ELEKTROLYT FÜR WIEDERAUFLADBARE LITHIUMBATTERIE UND WIEDERAUFLADBARE LITHIUMBATTERIE DAMIT

ADDITIF POUR ÉLECTROLYTE, ÉLECTROLYTE POUR BATTERIE AU LITHIUM RECHARGEABLE ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.12.2022 KR 20220171782**

(43) Date of publication of application:
**12.06.2024 Bulletin 2024/24**

(73) Proprietor: **Samsung SDI Co., Ltd.**
**Yongin-si, Gyeonggi-do 17084 (KR)**

(72) Inventors:
- **Tsay, Olga**
  **17084 Yongin-si, Gyeonggi-do (KR)**
- **Kim, Dahyun**
  **17084 Yongin-si, Gyeonggi-do (KR)**
- **Choi, Hyunbong**
  **17084 Yongin-si, Gyeonggi-do (KR)**
- **Shatunov, Pavel**
  **17084 Yongin-si, Gyeonggi-do (KR)**
- **Kim, Sundae**
  **17084 Yongin-si, Gyeonggi-do (KR)**
- **Yang, Yeji**
  **17084 Yongin-si, Gyeonggi-do (KR)**
- **Park, Hongryeol**
  **17084 Yongin-si, Gyeonggi-do (KR)**
- **Park, Sangwoo**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**WO-A2-2006/060654**

- **XU ZHANG ET AL: "2-Azidoethane-1-sulfonylfluoride (ASF): A Versatile Bis-clickable Reagent for SuFEx and CuAAC Click Reactions", EUROPEAN JOURNAL OF ORGANIC CHEMISTRY, WILEY-VCH, DE, vol. 2019, no. 8, 14 February 2019 (2019-02-14), pages 1763 - 1769, XP072120336, ISSN: 1434-193X, DOI: 10.1002/EJOC.201801825**
- **AHMED FAIZ ET AL: "Synthesis of an imidazolium functionalized imide based electrolyte salt and its electrochemical performance enhancement with additives in li-ion batteries", JOURNAL OF INDUSTRIAL AND ENGINEERING CHEMISTRY, THE KOREAN SOCIETY OF INDUSTRIAL AND ENGINEERING CHEMISTRY, KOREA, vol. 78, 25 October 2019 (2019-10-25), pages 178 - 185, XP085727764, ISSN: 1226-086X, [retrieved on 20190617], DOI: 10.1016/J.JIEC.2019.06.016**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 383 392 B1

- **AHMED FAIZ ET AL: "Synthesis and electrochemical performance of an imidazolium based Li salt as electrolyte with Li fluorinated sulfonylimides as additives for Li-Ion batteries", ELECTROCHIMICA ACTA, vol. 302, 11 February 2019 (2019-02-11), pages 161 - 168, XP085614782, ISSN: 0013-4686, DOI: 10.1016/ J.ELECTACTA.2019.02.040**

**Description**

## BACKGROUND OF THE INVENTION

### (a) Field of the Invention

This disclosure relates to an additive for an electrolyte, an electrolyte for a rechargeable lithium battery including the same, and a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between the negative electrode and the positive electrode, and may generally include an organic solvent in which lithium salt is dissolved, and this electrolyte is important in determining stability and performance of a rechargeable lithium battery.

The electrolyte may universally include, for example, a mixed solvent of high dielectric cyclic carbonates such as propylene carbonate and ethylene carbonate and chain carbonates such as diethyl carbonate, ethyl methyl carbonate and dimethyl carbonate in which a lithium salt such as $LiPF_6$, $LiBF_4$, or LiFSI is added. As the development of batteries in various fields is activated, development of batteries with stability in a wide temperature range is becoming more important. In terms of the electrolyte, it is important to develop an optimal combination of an organic solvent and an additive that is capable of suppressing an increase in resistance during high-temperature storage while improving room-temperature cycle-life characteristics.

Faiz Ahmed et al., Journal of Industrial and Engineering Chemistry, 78 (2019), pages 178-185, describe the use of imidazolium functionalized imide based electrolyte salt and its electrochemical performance enhancement with additives in lithium-ion batteries.

## SUMMARY OF THE INVENTION

An embodiment comprises an additive for an electrolyte as defined in claim 1 that improves room-temperature cycle-life characteristics of a rechargeable lithium battery and suppresses an increase in resistance during high-temperature storage.

Another embodiment comprises an electrolyte for a rechargeable lithium battery including the additive.

Another embodiment comprises a rechargeable lithium battery including the electrolyte.

The additive for the electrolyte of an embodiment is included in the electrolyte to improve room-temperature cycle-life characteristics of the rechargeable lithium battery while suppressing an increase in resistance during high-temperature storage.

## BRIEF DESCRIPTION OF THE DRAWINGS

FIG. 1 is a schematic view showing a rechargeable lithium battery according to an embodiment of the present invention.

FIGS. 2 and 3 are graphs showing evaluation results of CV characteristics of negative-electrode half-cells of evaluation examples of the present invention, respectively.

FIGS. 4 and 5 are graphs showing evaluation results of CV characteristics of positive-electrode half-cells of an evaluation example of the present invention, respectively.

## DETAILED DESCRIPTION OF THE EMBODIMENTS

Hereinafter, embodiments of the present invention are described in detail. However, these embodiments are exemplary, the present invention is not limited thereto and the present invention is defined by the scope of claims.

As used herein, unless otherwise defined, "substituted" means that at least one hydrogen in a substituent or compound is replaced by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least on hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

In the present specification, when specific definition is not otherwise provided, "*" indicates a point where the same or different atom or chemical formula is linked.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

**(Additive for Electrolyte)**

Hereinafter, the additive for the electrolyte according to an embodiment is described.

A rechargeable lithium battery, as a non-aqueous electrolyte is decomposed during the initial charge and discharge and thus forms a film capable of passivation on the surfaces of positive and negative electrodes, exhibits improved high-temperature storage characteristics but may be deteriorated by acids such as $HF^-$ and $PF_5^-$ produced by thermal decomposition of a lithium salt ($LiPF_6$ and the like), which is widely used in lithium ion batteries. This acid attack makes transition metal elements eluted from the positive electrode, which may bring about structural changes on the surface and thus increase sheet resistance of the electrode, wherein the metal elements, redox centers, are lost, decreasing theoretical capacity and thus deteriorating expression capacity. In addition, these eluted transition metal ions may be electrodeposited on the negative electrode reacting in a strong reduction potential region and thus not only consume electrons but also destroy the film during the electrodeposition and thus expose the surface of the negative electrode, causing an additional electrolyte decomposition reaction. As a result, as the resistance of the negative electrode is increased, there is a problem of increasing irreversible capacity and thus continuously deteriorating cell capacity.

The additive for the electrolyte according to an embodiment may solve this problem. Specifically, the additive according to an embodiment of the present invention is represented by Chemical Formula 1.

[Chemical Formula 1]

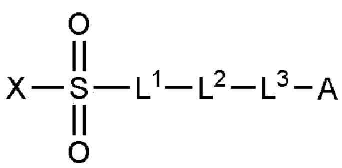

In Chemical Formula 1,

X is a halogen atom;
$L^1$ to $L^3$ are independently selected from the group consisting of a single bond, *-O-*, *-C(=O)O-*, a substituted or unsubstituted C1 to C10 alkylene group, a substituted or unsubstituted C2 to C10 alkenylene group, and a substituted or unsubstituted C2 to C10 alkynylene group,
with the provisos that
when $L^1$ is *-O-* or *-C(=O)O-*, $L^2$ is not *-O-*, and
when $L^2$ is *-O-* or *-C(=O)O-*, $L^3$ is not *-O-*; and
A is a substituent represented by Chemical Formula 2;

[Chemical Formula 2]

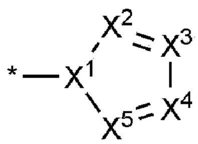

$X^1$ to $X^5$ are a nitrogen atom or CR;
two to four of $X^1$ to $X^5$ are nitrogen atoms; and
R is each a hydrogen atom, or two adjacent Rs are combined with each other to form a substituted or unsubstituted C6 to C10 aromatic ring. The compounds 2-Benzotriazol-1-yl-ethanesulfonyl fluoride and 2-Benzoimidazol-1-yl-ethanesulfonyl fluoride are excluded from the substance claim.

A sulfonyl group substituted with the halogen atom X may form SEI (Solid Electrolyte Interphase) based on lithium salt on the surface of the negative or positive electrode to reduce interface resistance of the positive electrode with an electrolyte, accelerate lithium ion transfer onto the surface of the negative or positive electrode, and suppress decomposition of the negative or positive electrode active material. In particular, as shown in evaluation examples to be described later, the additive is preferentially oxidized over the solvent forming a protective layer on the positive electrode surface and thus form SEI based on the lithium salt on the surface.

In addition, two to four nitrogen atoms included in the substituent represented by Chemical Formula 2 provide unshared electron pairs and also capture $PF_5^-$ to stabilize $LiPF_6$ salt, resultantly removing acids generated by decomposition of the lithium salt.

The $L^1$ to $L^3$ bond directly or link, through a linking group, the sulfonyl group substituted with the halogen atoms X and the substituent represented by Chemical Formula 2.

Accordingly, the additive for the electrolyte represented by Chemical Formula 1 has a structure that the sulfonyl group substituted with the halogen atoms X and the substituent represented by Chemical Formula 2 are directly bonded or linked by a linking group ($L^1$, $L^2$, $L^3$, or a combination thereof) and thus may solve the aforementioned problem and not only improve room-temperature cycle-life characteristics of a rechargeable lithium battery but also suppress an increase in resistance during the high-temperature storage.

Hereinafter, the additive for the electrolyte represented by Chemical Formula 1 is described in more detail.

In the sulfonyl group substituted with the halogen atom (X), the halogen atom (X) may be a fluorine atom (F), a chlorine atom (Cl), a bromine atom (Br), or an iodine atom (I). Specifically, the halogen atom (X) may be a fluorine atom (F) or a chlorine atom (Cl). For example, the halogen atom (X) may be a fluorine atom (F).

A may be a substituted or unsubstituted diazole group, a substituted or unsubstituted triazole group or a substituted or unsubstituted tetrazole group. The linking group $L^1$, $L^2$, $L^3$ may be bound to a nitrogen atom of the heteroaromatic group. A may be a pentagonal aromatic ring containing three nitrogen atoms (i.e. a triazole group) or a derivative thereof. Specifically, it may be a substituent represented by Chemical Formula 2, and three of $X^1$ to $X^5$ may be nitrogen atoms. For example, A may be a substituent represented by Chemical Formula 2-1 or 2-2:

[Chemical Formula 2-1]

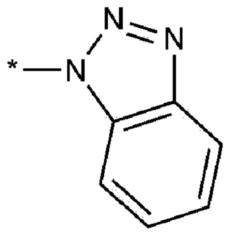

[Chemical Formula 2-2]

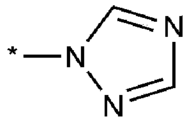

$L^1$ may be a substituted or unsubstituted C1 to C10 alkylene group, and both $L^2$ and $L^3$ may be a single bond. Specifically, $L^1$ may be a substituted or unsubstituted C1 to C5 alkylene group. More specifically, it may be a substituted or unsubstituted C1 to C3 alkylene group. For example, $L^1$ may be an unsubstituted C2 alkylene group ($*-CH_2CH_2-*$).

Chemical Formula 1 may be represented by Chemical Formula 1-1 or 1-2:

[Chemical Formula 1-1]

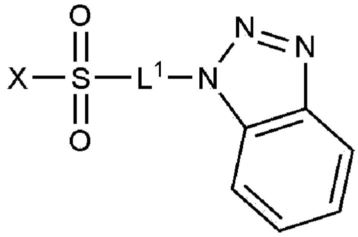

[Chemical Formula 1-2]

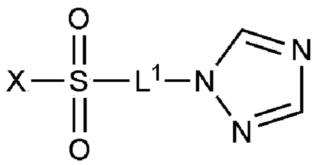

In Chemical Formulas 1-1 and 1-2, X is a halogen atom; and $L^1$ is a substituted or unsubstituted C1 to C10 alkylene group.

Representative examples of Formula 1 are as follows:

[Chemical Formula 1-1-1] (for reference only)

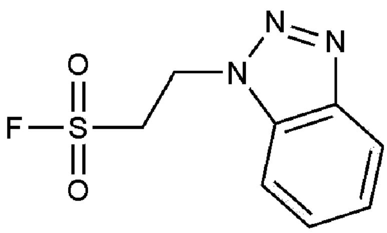

[Chemical Formula 1-2-1]

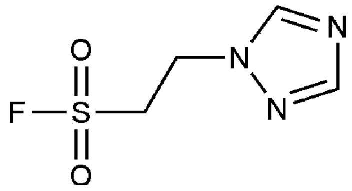

**(Electrolyte)**

The electrolyte for the rechargeable lithium battery according to another embodiment of the present invention includes a non-aqueous organic solvent, a lithium salt, and the aforementioned additive for an electrolyte.
The additive may be included in an amount of 0.1 parts by weight to 10 parts by weight based on a total of 100 parts by weight of the electrolyte for the rechargeable lithium battery.
Specifically, the additive may be included in an amount of greater than or equal to 0.1 parts by weight, greater than or equal to 0.2 parts by weight, greater than or equal to 0.3 parts by weight, or greater than or equal to 0.5 parts by weight, and less than or equal to 10 parts by weight, and less than or equal to 5.0 parts by weight, and less than or equal to 3.0 parts by weight, or 0.5 parts by weight to 1.0 part by weight based on the total 100 parts by weight of the electrolyte for the rechargeable lithium battery.
When the content range of the additive is as described above, it is possible to implement a rechargeable lithium battery having improved cycle-life characteristics and output characteristics by preventing an increase in resistance at high temperatures.
The electrolyte for the rechargeable lithium battery may further include at least one of other additives of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate ($LiBF_4$), lithium difluorophosphate ($LiPO_2F_2$), and 2-fluoro biphenyl (2-FBP).
By further including the aforementioned other additives, cycle-life may be further improved or gases generated from the positive electrode and the negative electrode may be effectively controlled during high-temperature storage.
The other additives may be included in an amount of about 0.2 parts by weight to about 20 parts by weight, specifically about 0.2 parts by weight to about 15 parts by weight, for example, about 0.2 parts by weight to about 10 parts by weight, based on 100 parts by weight of the electrolyte for the rechargeable lithium battery.
When the content of other additives is as described above, the increase in film resistance may be minimized, thereby contributing to the improvement of battery performance.
The non-aqueous organic solvent serves as a medium for transmitting ions taking part in the electrochemical reaction of a battery.
The non-aqueous organic solvent may be a carbonate-based, ester-based, ether-based, ketone-based, alcohol-based, or aprotic solvent.
The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, ketone-based solvent may include cyclohexanone, and the like. The alcohol-based solvent may include ethanol, isopropyl alcohol, and the like, and the aprotic solvent may include nitriles such as $R^1$-CN (wherein $R^1$ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.
The non-aqueous organic solvent may be used alone or in a mixture, and when used in a mixture, the mixing ratio may be appropriately adjusted in accordance with a desired battery performance, which is widely understood by those skilled in the art.
The carbonate-based solvent is prepared by mixing a cyclic carbonate and a chain carbonate. When the cyclic carbonate and chain carbonate are mixed together in a volume ratio of about 1:9 to about 9:1, a performance of the electrolyte may be improved.
In particular, in an embodiment, the non-aqueous organic solvent may include the cyclic carbonate and the chain carbonate in a volume ratio of 2:8 to 5:5, and specifically, the cyclic carbonate and the chain carbonate may be included in a

volume ratio of 2:8 to 4:6.

More specifically, the cyclic carbonate and the chain carbonate may be included in a volume ratio of 2:8 to 3:7.

For example, the non-aqueous organic solvent may be a carbonate-based solvent including ethylene carbonate (EC), ethylmethyl carbonate (EMC), and dimethyl carbonate (DMC) in a volume ratio of 2:4:4.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 4.

[Chemical Formula 4]

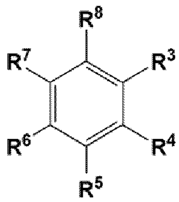

In Chemical Formula 4, $R^3$ to $R^8$ are the same or different and are hydrogen, a halogen, a C1 to C10 alkyl group, a C1 to C10 haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(CyF_{2y+1}SO_2)$ wherein, x and y are each independently an integer ranging from 1 to 20, LiCl, LiI, $LiB(C_2O_4)_2$ (lithium bis(oxalato) borate: LiBOB), LiDFOB (lithium difluoro(oxalato)borate), and $Li[PF_2(C_2O_4)_2]$ (lithium difluoro(bis oxalato) phosphate). The lithium salt may be used in a concentration ranging from about 0.1 M to about 2.0 M. Specifically, the concentration of the lithium salt may be greater than or equal to about 0.1 M, greater than or equal to about 0.5 M, greater than or equal to about 1.0 M, or greater than or equal to about 1.15 M; and less than or equal to about 2.0 M, less than or equal to about 1.8 M, less than or equal to about 1.5 M, or less than or equal to about 1.3 M. When the lithium salt is included at the above concentration range, an electrolyte may have excellent performance and lithium ion mobility due to optimal electrolyte conductivity and viscosity.

**(Rechargeable Lithium Battery)**

Yet another embodiment of the present invention comprises a rechargeable lithium battery which includes a positive electrode including a positive electrode active material; a negative electrode including a negative electrode active material; and the aforementioned electrolyte.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

Specifically, the positive electrode active material may include one or more composite oxides of a metal selected from cobalt, manganese, nickel, and a combination thereof, and lithium. Such a positive electrode active material may be at least one of lithium composite oxides represented by Chemical Formula 5.

[Chemical Formula 5] $Li_xM^1_yM^2_zM^3_{1-y-z}O_{2\pm a}X_a$

In Chemical Formula 5,
$0.5 \leq x \leq 1.8$, $0 \leq a \leq 0.1$, $0 < y \leq 1$, $0 \leq z \leq 1$, $0 < y+z \leq 1$, $M^1$, $M^2$, and $M^3$ are each independently at least one element selected from a metal such as Ni, Co, Mn, Al, B, Ba, Ca, Ce, Cr, Fe, Mo, Nb, Si, Sr, Mg, Ti, V, W, Zr or La, and a combination thereof, and X is at least one element selected from F, S, P, or Cl.

The positive electrode active material corresponding to Chemical Formula 5 may be at least one selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

Of course, the composite oxide in which a portion of the metal is substituted with a metal other than another metal may be used, and a phosphate compound of the composite oxide, for example, at least one selected $LiFePO_4$, $LiCoPO_4$, and $LiMnPO_4$ may be used. The lithium composite oxide may have a coating layer on the surface, or the lithium composite oxide may be mixed with another composite oxide having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

More specifically, a nickel-based positive electrode active material necessarily containing nickel may be used as the positive electrode active material. In this case, in Chemical Formula 5, $M^1$ may be Ni. For example, the positive electrode active material selected from $LiNi_bMn_cCo_dO_2$ (b+c+d=1), $LiNi_bMn_cCo_dAl_eO_2$ (b+c+d+e=1), and $LiNi_bCo_dAl_eO_2$ (b+d+e=1) may be a high Ni-based positive electrode active material. In the case of $LiNi_bMn_cCo_dO_2$ (b+c+d=1) and $LiNi_bMn_cCo_dAl_eO_2$ (b+c+d+e=1), a nickel content may be greater than or equal to about 60% ($b \geq 0.6$) or greater than or equal to about 80% ($b \geq 0.8$). In the case of $LiNi_bCo_dAl_eO_2$ (b+d+e=1), a nickel content may be greater than or equal to about 60% ($b \geq 0.6$), and more specifically, greater than or equal to about 80% ($b \geq 0.8$).

Meanwhile, as the positive electrode active material, a nickel-based cobalt-free positive electrode active material that necessarily contains nickel but does not contain cobalt may be used. In this case, Chemical Formula 5 may be represented by Chemical Formula 5-1:

[Chemical Formula 5-1] $Li_xNi_yMn_{(1-y)}O_2$

$0.5 \leq x \leq 1.8$, and $0 < y < 1$.

A content of the positive electrode active material may be about 90 wt% to about 98 wt% based on the total weight of the positive electrode composition.

Each content of the conductive material and the binder may be about 1 wt% to about 5 wt%, based on the total weight of the positive electrode composition.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous

carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$ ($0 < x < 2$), a Si-Q alloy wherein Q is an element selected from an alkali metal, an alkaline-earth metal, a Group 13 element, a Group 14 element except Si, a Group 15 element, a Group 16 element, a transition metal, a rare earth element, and a combination thereof), Sn, $SnO_2$, a Sn-$R^{11}$ alloy (wherein $R^{11}$ is an element selected from an alkali metal, an alkaline-earth metal, a Group 13 element, a Group 14 element except Sn, a Group 15 element, a Group 16 element, a transition metal, a rare earth element, and a combination thereof), and the like. At least one of these materials may be mixed with $SiO_2$.

The elements Q and $R^{11}$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a more specific embodiment, the negative electrode active material may include graphite, silicon, or a combination thereof. More specifically, at least one of graphite and Si composites may be included.

The Si composite may include a core including Si-based particles and an amorphous carbon coating layer. For example, the Si-based particles may include at least one of Si particles, a Si-C composite, $SiO_x$ ($0 < x \leq 2$), and a Si alloy.

For example, the Si composite may include pores in the central portion of the core including the Si-based particles, a radius of the central portion may correspond to about 30% to about 50% of the radius of the negative electrode active material, and an average particle diameter of the Si-based particles may be about 10 nm to about 200 nm.

In the present specification, an average particle diameter may be a particle size (D50) at a volume ratio of 50% in a cumulative size-distribution curve.

When the average particle diameter of the Si-based particles is within the above ranges, volume expansion occurring during charging and discharging may be suppressed, and interruption of a conductive path due to particle crushing during charging and discharging may be prevented.

The core including the Si-based particles may further include amorphous carbon, and at this time, the central portion may not include amorphous carbon, and the amorphous carbon may exist only in the surface portion of the negative electrode active material.

Herein, the surface portion means a region from the outermost surface of the central portion to the outermost surface of the negative electrode active material.

In addition, the Si-based particles are substantially uniformly included throughout the negative electrode active material, that is, may be present in a substantially uniform concentration in the central portion and surface portion.

The amorphous carbon may be soft carbon, hard carbon, mesophase pitch carbide, calcined coke, or a combination thereof.

For example, the Si-C composite may include Si particles and crystalline carbon.

The Si particles may be included in an amount of about 1 wt% to about 60 wt%, for example, about 3 wt% to about 60 wt%, based on the total weight of the Si-C composite.

The crystalline carbon may be, for example, graphite, and specifically, natural graphite, artificial graphite, or a combination thereof.

An average particle diameter of the crystalline carbon may be about 5 μm to about 30 μm.

When the negative electrode active material includes the graphite and Si composite together, the graphite and Si composite may be included in the form of a mixture, and the graphite and Si composite may be included in a weight ratio of about 99 : 1 to about 50 : 50.

More specifically, the graphite and Si composite may be included in a weight ratio of about 97 : 3 to about 80 : 20, or about 95 : 5 to about 80 : 20.

The amorphous carbon precursor may include coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on the total weight of the negative electrode active material layer.

In an embodiment, the negative electrode active material layer may include a binder, and optionally a conductive material. A content of the binder in the negative electrode active material layer may be about 1 wt% to about 5 wt% based on the total weight of the negative electrode active material layer. In addition, when the conductive material is further included, about 90 wt% to about 98 wt% of the negative electrode active material, about 1 wt% to about 5 wt% of the binder, and about 1 wt% to about 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a

combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 parts by weight to about 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

Hereinafter, examples of the present invention and comparative examples are described. These examples, however, are not in any sense to be interpreted as limiting the scope of the invention.

**(Synthesis Example: Synthesis of Additives)**

An additive was prepared according to the following published procedure: J. Org. Chem., Vol. 44, No. 22, 1979]. Appropriate triazole was reacted with ethenesulfonyl fluoride (ESF) in dimethyl formamide (DMF).

**Synthesis Example 1: Synthesis of Compound Represented by Chemical Formula 1-1-1** (for reference only)

A solution of ESF (5.5 g, 0.05 mol) in 10 mL of DMF was added to another solution of benzotriazole (5.96 g, 0.05 mol) in 20 mL of DMF. The reaction mixture was stirred at 45 °C for 4 hours. After removing DMF through rotation evaporation at 60 °C, toluene was added to the residue. The precipitated product was filtered, washed with toluene, and vacuum-dried, obtaining a compound represented by Chemical Formula 1-1-1 (2-(1H-1,2,3-benzotriazole-1-yl)ethane sulfonyl fluoride).

[Chemical Formula 1-1-1]

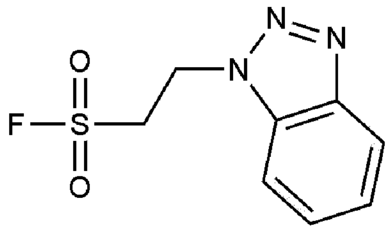

$^1$H NMR(400MHz, CDCl3) 4.17(m, 2H), 5.17(t, 2H), 7.44(1m, 1H), 7.60(m, 1H), 8.10(d, 1H); 19F NMR(376MHz, CDCl3) 57.44.

**Synthesis Example 2: Synthesis of Compound Represented by Chemical Formula 1-2-1**

A solution of ESF (7.72 g, 0.07 mol) in 10 mL of DMF was added to another solution of triazole (4.49 g, 0.065 mol) in 25 mL of DMF. The reaction mixture was stirred at room temperature for 4 hours. After removing DMF through rotation evaporation at 60 °C, toluene was added to the residue. The precipitated product was filtered, washed with toluene, and vacuum-dried, obtaining a compound represented by Chemical Formula Chemical Formula 1-2-1 (2-(1H-1,2,4-triazole-1-yl)ethanesulfonyl fluoride).

[Chemical Formula 1-2-1]

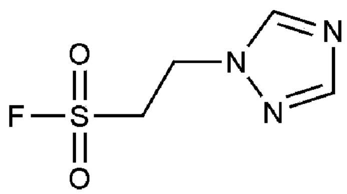

.

$^1$H NMR(400MHz, CDCl3) 4.01(m, 2H), 4.73(t, 2H), 8.01(s, 1H), 8.19(s, 1H); 19F NMR(376MHz, CDCl3) 57.83.

**Comparative Synthesis Example 1: Synthesis of Compound Represented by Chemical Formula A**

The compound represented by Chemical Formula 1-1-1 (4.5 g, 0.02 mol) was reacted with glacial acetic acid (30 ml) at 100 °C for 48 hours. Subsequently, the reaction mixture was reduced under vacuum, and acetone was added to the residue. The precipitated product was filtered, washed with anhydrous acetone, and vacuum-dried, obtaining a compound represented by Chemical Formula A.

[Chemical Formula A]

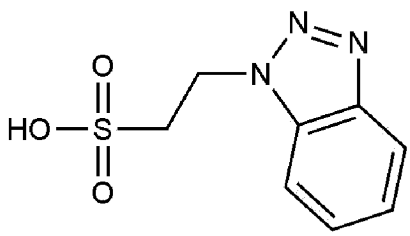

**Comparative Synthesis Example 2: Synthesis of Compound Represented by Chemical Formula B**

Methyl vinyl sulfone (5.3 g, 0.05 mol) and bicarbonate potassium were added to a solution of benzotriazole (5.96 g, 0.05 mol) in 50 ml of methyl ethyl ketone (MEK) and then, reacted together. After refluxing the reaction mixture for 24 hours and then, filtering and removing the solvent therefrom through rotation evaporation, a product therefrom was vacuum-dried, obtaining a compound represented by Chemical Formula B.

[Chemical Formula B]

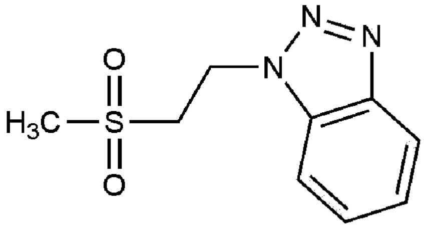

**(Example: Preparation of Electrolyte)**

Example 1 (for reference only)

The electrolyte of Example 1 was prepared by mixing the following lithium salt, non-aqueous organic solvent, and additive.

Lithium salt: 1.15 M $LiPF_6$
Non-aqueous organic solvent: ethylene carbonate: ethylmethyl carbonate: dimethyl carbonate (EC: EMC:DMC = a volume ratio of 20:40:40)
Additive: 0.5 parts by weight of compound represented by Chemical Formula 1-1-1

(However, in the above composition of the electrolyte, "parts by weight" means the relative weight of the additive based on 100 weight of the total electrolyte (lithium salt + non-aqueous organic solvent) except the additive.)
A rechargeable lithium battery cell was then suitably manufactured as Example 1 in which the aforementioned electrolyte was utilized.

Example 2

An electrolyte of Example 2 was prepared in the same manner as in Example 1 except that the compound represented by Chemical Formula 1-2-1 was used instead of the compound represented by Chemical Formula 1-1-1 as an additive for an electrolyte.
In addition, a rechargeable lithium battery cell of Example 2 was manufactured in the same manner as in Example 1 except that the aforementioned electrolyte of the example was used.

Example 3 (for reference only)

An electrolyte of Example 3 was prepared in the same manner as in Example 1 except that the compound represented by Chemical Formula 1-1-1 was used in an amount of 0.2 parts by weight as an additive for an electrolyte.
In addition, a rechargeable lithium battery cell of Example 3 was manufactured in the same manner as in Example 1 except that the aforementioned electrolyte of the example was used.

Example 4 (for reference only)

An electrolyte of Example 4 was prepared in the same manner as in Example 1 except that the compound represented by Chemical Formula 1-1-1 was used in an amount of 1.0 part by weight as an additive for an electrolyte.
In addition, a rechargeable lithium battery cell of Example 4 was manufactured in the same manner as in Example 1 except that the aforementioned electrolyte of the example was used.

Example 5

An electrolyte of Example 5 was prepared in the same manner as in Example 1 except that the compound represented by Chemical Formula 1-2-1 was used in an amount of 1.0 part by weight as an additive for an electrolyte.
In addition, a rechargeable lithium battery cell of Example 5 was manufactured in the same manner as in Example 5 except that the aforementioned electrolyte of the example was used.

**Comparative Example 1 (Ref.)**

A rechargeable lithium battery cell was manufactured in the same manner as in Example 1 except that the additive was not used.

**Comparative Example 2**

An electrolyte of Comparative Example 2 was prepared in the same manner as in Example 1 except that the compound represented by Chemical Formula A was used as an additive for an electrolyte.

In addition, a rechargeable lithium battery cell of Comparative Example 2 was manufactured in the same manner as in Example 1 except that the aforementioned electrolyte of the comparative example was used.

**Comparative Example 3**

An electrolyte of Comparative Example 3 was prepared in the same manner as in Example 1 except that the compound represented by Chemical Formula B was used instead of the compound represented by Chemical Formula A as an additive for an electrolyte.

In addition, a rechargeable lithium battery cell of Comparative Example 3 was manufactured in the same manner as in Example 1 except that the aforementioned electrolyte of the comparative example was used.

Each composition of the additives for an electrolyte according to Examples 1 to 8 and Comparative Examples 1 to 3 was shown in Table 1.

(Table 1)

| | Lithium salt (M) | Nn-aqueous organic solvent (volume ratio) | | | Additive (parts by weight) |
|---|---|---|---|---|---|
| | $LiPF_6$ | EC | EMC | DMC | |
| Comparative Example 1 (Ref.) | 1.15 | 2 | 4 | 4 | - |
| Comparative Example 2 | 1.15 | 2 | 4 | 4 | Chemical Formula A 0.5 parts by weight |
| Comparative Example 3 | 1.15 | 2 | 4 | 4 | Chemical Formula B 0.5 parts by weight |
| Example 1 | 1.15 | 2 | 4 | 4 | Chemical Formula 1 0.5 parts by weight |
| Example 2 | 1.15 | 2 | 4 | 4 | Chemical Formula 2 0.5 parts by weight |
| Example 3 | 1.15 | 2 | 4 | 4 | Chemical Formula 1 0.2 parts by weight |
| Example 4 | 1.15 | 2 | 4 | 4 | Chemical Formula 1 1.0 part by weight |
| Example 5 | 1.15 | 2 | 4 | 4 | Chemical Formula 2 1.0 part by weight |

For reference, in Table 1, a molar concentration (M) of a lithium salt refers to an amount (the number of moles) of the lithium salt based on 1 L of an electrolyte, a volume ratio of a non-aqueous organic solvent refers to a volume ratio of EC:EMC:DMC, and a part by weight of an additive refers to a relative weight based on 100 weights of a total weight of the electrolyte (lithium salt + non-aqueous organic solvent).

**(Evaluation Examples: Evaluation of Rechargeable Lithium Battery Cells)**

**Evaluation 1: Room-temperature Cycle-life Characteristics and Resistance Characteristics before and after High-temperature Storage**

(1) Room-temperature Cycle-life Characteristics

The rechargeable lithium battery cells according to Examples 1 to 5 and Comparative Examples 1 to 3 were evaluated with respect to room-temperature cycle-life characteristics, and the results are shown in Table 2.

Specifically, the rechargeable lithium battery cells were 150 cycles charged and discharged under conditions of charging at 0.33 C (CC/CV, 4.3 V, 0.025 C cut-off) / discharging at 1.0 C (CC, 2.5 V Cut-off) at 25 °C and then, calculated with respect to cycle-life (capacity retention) according to Equation 1.

Capacity retention rate = (capacity after 150 cycles / capacity after 1 cycle) * 100 [Equation 1]

(2) Resistance characteristics before and after high-temperature Storage

The rechargeable lithium battery cells according to Examples 1 to 5 and Comparative Example 1 to 3 were evaluated with respect to direct current internal resistance (DC-IR) characteristics before and after the high-temperature storage, and the results are shown in Table 2.

Specifically, the rechargeable lithium battery cells were measured with respect to initial direct current internal resistance (DC-IR) as $\triangle V/\triangle I$ (voltage change / current change) and then, DC resistance after setting internal maximum energy state of the batteries to a fully charge state (SOC 100%) and storing the cells at 60 °C for 30 days, which were used to calculate a DCIR increase rate (%) according to Equation 2.

DC-IR increase rate = (DC-IR after storage at 60 °C for 30 days - initial DC-IR) / initial DC-IR * 100 [Equation 2]

(Table 2)

| | Cycle-life (capacity retention) (@25 °C, 150 Cycles) | Initial DC-IR @25 °C (mΩ) | DC-IR after 30 days @60 °C (mΩ) | DC-IR variation ratio after 30 days @60 °C (%) |
|---|---|---|---|---|
| Comparative Example 1 | 79.2 | 4.23 | 7.13 | 68.6 |
| Comparative Example 2 | 80.2 | 4.52 | 7.69 | 70.2 |
| Comparative Example 3 | 80.5 | 4.48 | 7.69 | 71.7 |
| Example 1 | 84.2 | 4.02 | 6.08 | 51.2 |
| Example 2 | 83.0 | 4.18 | 7.02 | 67.9 |
| Example 3 | 81.1 | 4.22 | 6.56 | 55.4 |
| Example 4 | 83.7 | 3.99 | 6.05 | 51.7 |
| Example 5 | 82.5 | 4.33 | 7.28 | 68.2 |

Referring to Table 2, the additive for the electrolyte according to an embodiment was included in an electrolyte, not only improving room-temperature cycle-life characteristics of the rechargeable lithium battery cells but also suppressing an increase in resistance during the high-temperature storage.

**Evaluation Example 2: Cyclic Voltammetry Characteristics**

The rechargeable lithium battery cells according to Examples 1 to 2 and Comparative Example 1 were evaluated with respect to cyclic voltammetry characteristics at each case of using a negative electrode or a positive electrode as an operation electrode, and the results are shown in FIGS. 2 and 3.

(1) Negative-electrode Half-cell

Artificial graphite with D50 of 5 μm as a negative electrode active material, polyvinylidene fluoride as a binder, and acetylene black as a conductive material were mixed in a weight ratio of 96:2:2 and then, dispersed in N-methyl pyrrolidone, preparing negative electrode active material slurry.

The negative electrode active material slurry was coated on a 14 μm-thick Al foil, dried at 110 °C, and pressed, manufacturing a negative electrode.

The negative electrode was assembled along with a 10 μm-thick Li foil as a counter electrode (positive electrode) and a 25 μm-thick polyethylene separator to manufacture an electrode assembly, and the electrolyte was injected thereinto, manufacturing a rechargeable lithium battery cell in the form of a CR2032-type coin-half cell in a common method.

The rechargeable lithium battery cell was 1 to 3 cycles charged at a scan speed of 0.1 mV/s, while a voltage applied thereto was changed from 3 V to 0 V. Through this process, the cell was evaluated with respect to cyclic voltammetry characteristics, and the results are shown in FIGS. 2 and 3.

(2) Positive-electrode Half-cell

$LiNi_{0.8}Mn_{0.2}O_2$ with D50 of 5 μm as a positive electrode active material, polyvinylidene fluoride as a binder, and acetylene black as a conductive material were mixed in a weight ratio of 96:2:2 and then, dispersed in N-methyl pyrrolidone, preparing positive electrode active material slurry.

The positive electrode active material slurry was coated on a 14 μm-thick Al foil, dried at 110 °C, and pressed, manufacturing a positive electrode.

The positive electrode was assembled with a 10 μm-thick Li foil as a counter electrode (negative electrode) and a 25 μm-thick polyethylene separator to manufacture an electrode assembly, and the electrolyte was injected thereinto, manufacturing a rechargeable lithium battery cell in the form of a CR2032-type coin-half cell.

The rechargeable lithium battery cell was 1 to 3 cycles charged at a scan speed of 0.1 mV/s, while a voltage applied thereto was changed from 3 V to 4.5 V. Through this process, the cell was evaluated with respect to cyclic voltammetry characteristics, and the results are shown in FIGS. 4 and 5.

FIGS. 2 to 5 show that the additive according to an embodiment formed SEI on the surface of the negative electrode or the positive electrode to passivate them.

In particular, when a nickel-based cobalt (Co)-free positive electrode active material necessarily including nickel but not cobalt was used as a positive electrode active material, the additive was preferentially oxidized over the solvent forming a protective layer on the surface of the positive electrode and then formed SEI based on a lithium salt on the surface of the positive electrode to passivate it.

Comprehensively, the additive for the electrolyte according to an embodiment represented by Examples 1 to 5 had a structure that the sulfonyl group substituted with halogen atoms X and the substituent represented by Chemical Formula 2 were directly bonded or linked by a linking group ($L^1$, $L^2$, $L^3$, or a combination thereof) and thus solved the aforementioned problem and suppressed an increase in resistance during the high-temperature storage and as well as improved room-temperature cycle-life characteristics of the rechargeable lithium battery cell.

## Claims

1. An additive for an electrolyte represented by Chemical Formula 1:

[Chemical Formula 1]

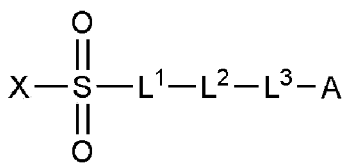

wherein, in Chemical Formula 1,

X is a halogen atom;
$L^1$ to $L^3$ are independently selected from the group consisting of a single bond, *-O-*, *-C(=O)O-*, a substituted or unsubstituted C1 to C10 alkylene group, a substituted or unsubstituted C2 to C10 alkenylene group, and a substituted or unsubstituted C2 to C10 alkynylene group,
with the provisos that
when $L^1$ is *-O-* or *-C(=O)O-*, $L^2$ is not *-O-*, and
when $L^2$ is *-O-* or *-C(=O)O-*, $L^3$ is not *-O-*; and
A is a substituent represented by Chemical Formula 2;

[Chemical Formula 2]

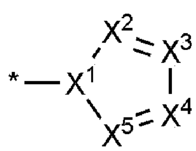

$X^1$ to $X^5$ are a nitrogen atom or CR;
two to four of $X^1$ to $X^5$ are nitrogen atoms; and
R is each a hydrogen atom, or two adjacent Rs are combined with each other to form a substituted or unsubstituted C6 to C10 aromatic ring,
wherein "substituted" means that at least one hydrogen is replaced by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group,
except 2-benzotriazol-1-yl-ethanesulfonyl fluoride and 2-benzoimidazol-1-yl-ethanesulfonyl fluoride.

**2.** The additive of claim 1, wherein
three of $X^1$ to $X^5$ are nitrogen atoms.

**3.** The additive of claim 1, wherein
A is a substituent represented by Chemical Formula 2-1 or 2-2:

[Chemical Formula 2-1]

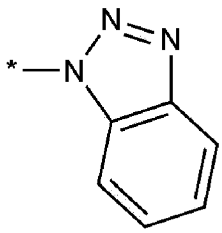

[Chemical Formula 2-2]

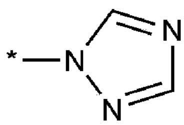

.

**4.** The additive of claim 1, wherein
$L^1$ is a substituted or unsubstituted C1 to C10 alkylene group, and both $L^2$ and $L^3$ are a single bond.

**5.** The additive of claim 1, wherein
Chemical Formula 1 is represented by Chemical Formula 1-1 or 1-2:

[Chemical Formula 1-1]

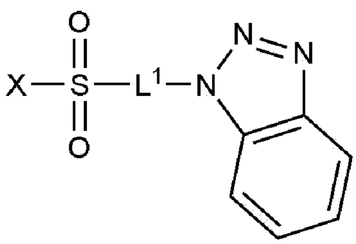

[Chemical Formula 1-2]

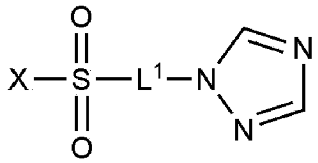

wherein, in Chemical Formulas 1-1 and 1-2,

X is a halogen atom; and
$L^1$ is a substituted or unsubstituted C1 to C10 alkylene group.

**6.** The additive of one of the preceding claims, wherein X is a fluorine atom.

**7.** The additive for the electrolyte of claim 1, wherein Chemical Formula 1 is represented by Chemical Formula 1-2-1:

[Chemical Formula 1-2-1]

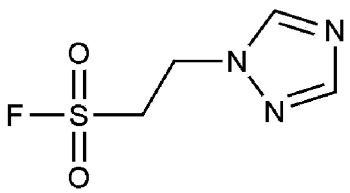

.

**8.** An electrolyte for a rechargeable lithium battery, comprising a non-aqueous organic solvent, a lithium salt, and an additive for the electrolyte represented by Chemical Formula 1:

[Chemical Formula 1]

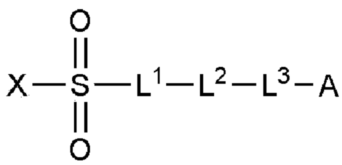

wherein, in Chemical Formula 1,

X is a halogen atom;
$L^1$ to $L^3$ are independently selected from the group consisting of a single bond, *-O-*, *-C(=O)O-*, a substituted or unsubstituted C1 to C10 alkylene group, a substituted or unsubstituted C2 to C10 alkenylene group, and a substituted or unsubstituted C2 to C10 alkynylene group,
with the provisos that
when $L^1$ is *-O-* or *-C(=O)O-*, $L^2$ is not *-O-*, and
when $L^2$ is *-O-* or *-C(=O)O-*, $L^3$ is not *-O-*; and
A is a substituent represented by Chemical Formula 2;

[Chemical Formula 2]

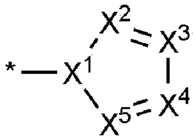

$X^1$ to $X^5$ are a nitrogen atom or CR;
two to four of $X^1$ to $X^5$ are nitrogen atoms; and
R is each a hydrogen atom, or two adjacent Rs are combined with each other to form a substituted or unsubstituted C6 to C10 aromatic ring,
wherein "substituted" means that at least one hydrogen is replaced by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

**9.** The electrolyte for the rechargeable lithium battery of claim 8, wherein
the additive for the electrolyte is included in an amount of 0.1 parts by weight to 10 parts by weight based on a total of 100 parts by weight of the electrolyte for the rechargeable lithium battery.

**10.** The electrolyte for the rechargeable lithium battery of claim 8, wherein
the non-aqueous organic solvent includes a carbonate-based, ester-based, ether-based, ketone-based, alcohol-based, or aprotic solvent.

**11.** The electrolyte for the rechargeable lithium battery of claim 10, wherein
the non-aqueous organic solvent is a carbonate-based solvent including ethylene carbonate (EC), ethylmethyl carbonate (EMC), and dimethyl carbonate (DMC).

**12.** The electrolyte for the rechargeable lithium battery of claim 8, wherein
the lithium salt includes one or more selected from $LiPF_6$, $LiBF_4$, $LiSbF_6$, $LiAsF_6$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein, x and y are an integer of 1 to 20), LiCl, LiI, $LiB(C_2O_4)_2$ (lithium bis(oxalato) borate: LiBOB), LiDFOB (lithium difluoro(oxalato) borate), and $Li[PF_2(C_2O_4)_2]$ (lithium difluoro (bis oxalato) phosphate).

**13.** The electrolyte for the rechargeable lithium battery of claim 12, wherein
a concentration of the lithium salt is 0.1 M to 2.0 M.

**14.** A rechargeable lithium battery (100), comprising

a positive electrode (114) including a positive electrode active material;
a negative electrode (112) including a negative electrode active material; and
the electrolyte for the rechargeable lithium battery of any one of claim 8 to claim 13.

**15.** The rechargeable lithium battery of claim 14, wherein
the positive electrode active material includes a nickel-based positive electrode active material.

**Patentansprüche**

**1.** Additiv für einen Elektrolyten, dargestellt durch die chemische Formel 1:

[Chemische Formel 1]

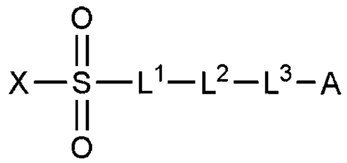

wobei in der chemischen Formel 1

X ein Halogenatom ist;
$L^1$ bis $L^3$ unabhängig voneinander ausgewählt sind aus der Gruppe bestehend aus einer Einfachbindung, *-O-*, *-C(=O)O-*, einer substituierten oder unsubstituierten C1- bis C10-Alkylengruppe, einer substituierten oder unsubstituierten C2- bis C10-Alkenylengruppe und einer substituierten oder unsubstituierten C2- bis C10-Alkinylengruppe,
unter der Maßgabe, dass
wenn $L^1$ *-O-* oder *-C(=O)O-* ist, $L^2$ nicht *-O-* ist, und
wenn $L^2$ *-O-* oder *-C(=O)O-* ist, $L^3$ nicht *-O-*; und
A ein Substituent ist, der durch die chemische Formel 2 dargestellt ist;

[Chemische Formel 2]

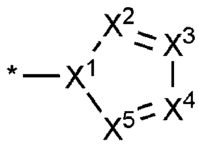

$X^1$ bis $X^5$ ein Stickstoffatom oder CR sind;
zwei bis vier von $X^1$ bis $X^5$ Stickstoffatome sind; und
R jeweils ein Wasserstoffatom ist oder zwei benachbarte Rs miteinander kombiniert sind, um einen substituierten oder unsubstituierten aromatischen C6-bis C10-Ring zu bilden,
wobei "substituiert" bedeutet, dass mindestens ein Wasserstoff durch Deuterium, eine Halogengruppe, eine Hydroxylgruppe, eine Aminogruppe, eine C1- bis C30-Aminogruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe oder eine Cyanogruppe ersetzt ist,
ausgenommen 2-Benzotriazol-1-yl-ethansulfonylfluorid und 2-Benzmidazol-1-yl-ethansulfonylfluorid.

**2.** Additiv nach Anspruch 1, wobei
drei von $X^1$ bis $X^5$ Stickstoffatome sind.

**3.** Additiv nach Anspruch 1, wobei
A ein Substituent ist, der durch die chemische Formel 2-1 oder 2-2 dargestellt ist:

[Chemische Formel 2-1]

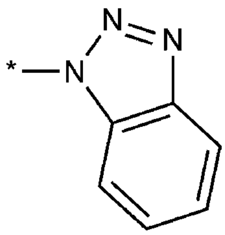

[Chemische Formel 2-2]

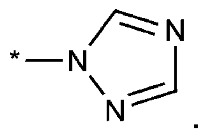

4. Additiv nach Anspruch 1, wobei

$L^1$ eine substituierte oder unsubstituierte C1- bis C10-Alkylengruppe ist, und sowohl $L^2$ als auch $L^3$ eine Einfachbindung sind.

5. Additiv nach Anspruch 1, wobei die chemische Formel 1 durch die chemische Formel 1-1 oder 1-2 dargestellt ist:

[Chemische Formel 1-1]

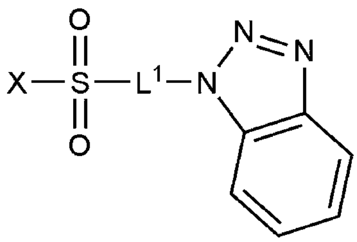

[Chemische Formel 1-2]

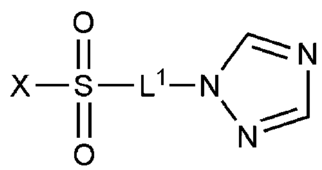

wobei in den chemischen Formeln 1-1 und 1-2

X ein Halogenatom ist; und
$L^1$ eine substituierte oder unsubstituierte C1- bis C10-Alkylengruppe ist.

6. Additiv nach einem der vorhergehenden Ansprüche, wobei X ein Fluoratom ist.

7. Additiv für den Elektrolyten nach Anspruch 1, wobei die chemische Formel 1 durch die chemische Formel 1-2-1 dargestellt ist:

[Chemische Formel 1-2-1]

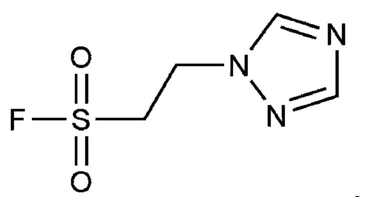

8. Elektrolyt für eine wiederaufladbare Lithiumbatterie, umfassend

ein nicht wässriges organisches Lösungsmittel, ein Lithiumsalz und ein Additiv für den Elektrolyten, dargestellt durch die chemische Formel 1:

[Chemische Formel 1]

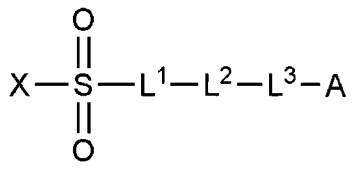

wobei in der chemischen Formel 1

X ein Halogenatom ist;
$L^1$ bis $L^3$ unabhängig voneinander ausgewählt sind aus der Gruppe bestehend aus einer Einfachbindung, *-O-*, *-C(=O)O-*, einer substituierten oder unsubstituierten C1- bis C10-Alkylengruppe, einer substituierten oder unsubstituierten C2- bis C10-Alkenylengruppe und einer substituierten oder unsubstituierten C2- bis C10-Alkinylengruppe,
unter der Maßgabe, dass
wenn $L^1$ *-O-* oder *-C(=O)O-* ist, $L^2$ nicht *-O-* ist, und
wenn $L^2$ *-O-* oder *-C(=O)O-* ist, $L^3$ nicht *-O-*; und
A ein Substituent ist, der durch die chemische Formel 2 dargestellt ist;

[Chemische Formel 2]

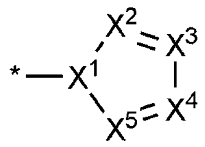

$X^1$ bis $X^5$ ein Stickstoffatom oder CR sind;
zwei bis vier von $X^1$ bis $X^5$ Stickstoffatome sind; und
R jeweils ein Wasserstoffatom ist oder zwei benachbarte Rs miteinander kombiniert sind, um einen substituierten oder unsubstituierten aromatischen C6-bis C10-Ring zu bilden,
wobei "substituiert" bedeutet, dass mindestens ein Wasserstoff durch Deuterium, eine Halogengruppe, eine Hydroxylgruppe, eine Aminogruppe, eine C1- bis C30-Aminogruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe oder eine Cyanogruppe ersetzt ist.

**9.** Elektrolyt für die wiederaufladbare Lithiumbatterie nach Anspruch 8, wobei
der Additiv für den Elektrolyten in einer Menge von 0,1 Gew.-Teilen bis 10 Gew.-Teilen basierend auf insgesamt 100 Gew.-Teilen des Elektrolyten für die wiederaufladbare Lithiumbatterie enthalten ist.

**10.** Elektrolyt für die wiederaufladbare Lithiumbatterie nach Anspruch 8, wobei
das nicht wässrige organische Lösungsmittel ein carbonatbasiertes, esterbasiertes, etherbasiertes, ketonbasiertes, alkoholbasiertes oder aprotisches Lösungsmittel beinhaltet.

**11.** Elektrolyt für die wiederaufladbare Lithiumbatterie nach Anspruch 10, wobei
das nicht wässrige organische Lösungsmittel ein carbonatbasiertes Lösungsmittel ist, das Ethylencarbonat (EC), Ethylmethylcarbonat (EMC) und Dimethylcarbonat (DMC) beinhaltet.

**12.** Elektrolyt für die wiederaufladbare Lithiumbatterie nach Anspruch 8, wobei
das Lithiumsalz eines oder mehrere beinhaltet, ausgewählt aus $LiPF_6$, $LiBF_4$, $LiSbF_6$, $LiAsF_6$, $Li(FSO_2)_2N$ (Lithium-

bis(fluorsulfonyl)imid: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wobei x und y ganze Zahlen von 1 bis 20 sind), LiCl, LiI, $LiB(C_2O_4)_2$ (Lithiumbis(oxalato)borat: LiBOB), LiDFOB (Lithiumdifluor(oxalato)borat) und $Li[PF_2(C_2O_4)_2]$ (Lithiumdifluor(bisoxalato)phosphat).

**13.** Elektrolyt für die wiederaufladbare Lithiumbatterie nach Anspruch 12, wobei eine Konzentration des Lithiumsalzes 0,1 M bis 2,0 M beträgt.

**14.** Wiederaufladbare Lithiumbatterie (100), umfassend

eine positive Elektrode (114), die ein Aktivmaterial für die positive Elektrode beinhaltet;
eine negative Elektrode (112), die ein Aktivmaterial für die negative Elektrode beinhaltet; und
den Elektrolyten für die wiederaufladbare Lithiumbatterie nach einem von Anspruch 8 bis Anspruch 13.

**15.** Wiederaufladbare Lithiumbatterie nach Anspruch 14, wobei das Aktivmaterial für die positive Elektrode ein nickelbasiertes Aktivmaterial für die positive Elektrode beinhaltet.

## Revendications

**1.** Additif pour un électrolyte représenté par la Formule chimique 1 :

[Formule chimique 1]

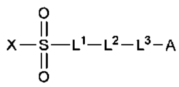

dans lequel, dans la Formule chimique 1,

X est un atome d'halogène ;
$L^1$ à $L^3$ sont sélectionnés indépendamment dans le groupe consistant en une liaison unique, *-O-*, *-C(=O)O-*, un groupe alkylène en C1 à C10 substitué ou non substitué, un groupe alcénylène en C2 à C10 substitué ou non substitué et un groupe alcynylène en C2 à C10 substitué ou non substitué,
à condition que
lorsque $L^1$ est *-O-* ou *-C(=O)O-*, $L^2$ ne soit pas *-O-*, et
lorsque $L^2$ est *-O-* ou *-C(=O)O-*, $L^3$ ne soit pas *-O-* et
A est un substituant représenté par la Formule chimique 2 ;

[Formule chimique 2]

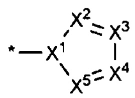

$X^1$ à $X^5$ sont un atome d'azote ou CR ;
deux à quatre de $X^1$ à $X^5$ sont des atomes d'azote ; et
R est chacun un atome d'hydrogène ou deux R adjacents sont combinés l'un avec l'autre pour former un cycle aromatique en C6 à C10 substitué ou non substitué,
dans lequel le terme « substitué » signifie qu'au moins un hydrogène est remplacé par le deutérium, un groupe halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10 ou un groupe cyano,
à l'exception du fluorure de 2-benzotriazol-1-yl-éthanesulfonyle et du fluorure de 2-benzoimidazol-1-yl-éthanesulfonyle.

**2.** Additif selon la revendication 1, dans lequel trois de $X^1$ à $X^5$ sont des atomes d'azote.

3. Additif selon la revendication 1, dans lequel
A est un substituant représenté par la Formule chimique 2-1 ou 2-2 :

[Formule chimique 2-1]

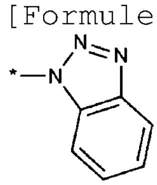

[Formule chimique 2-2]

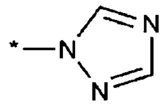

4. Additif selon la revendication 1, dans lequel

$L^1$ est un groupe alkylène en C1 à C10 substitué ou non substitué, et
$L^2$ et $L^3$ sont tous deux une liaison unique.

5. Additif selon la revendication 1, dans lequel
la Formule chimique 1 est représentée par la Formule chimique 1-1 ou la Formule chimique 1-2 :

[Formule chimique 1-1]

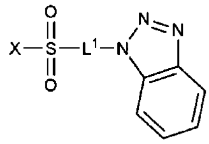

[Formule chimique 1-2]

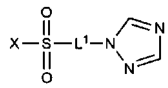

dans lequel, dans les Formules chimiques 1-1 et 1-2,

X est un atome d'halogène ; et
$L^1$ est un groupe alkylène en C1 à C10 substitué ou non substitué.

6. Additif selon l'une des revendications précédentes, dans lequel
X est un atome de fluor.

7. Additif pour l'électrolyte selon la revendication 1, dans lequel
la Formule chimique 1 est représentée par la Formule chimique 1-2-1 :

[Formule chimique 1-2-1]

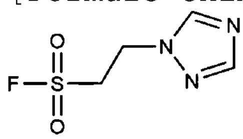

8. Électrolyte pour une batterie rechargeable au lithium, comportant :
un solvant organique non aqueux, un sel de lithium et un additif pour l'électrolyte représenté par la Formule chimique 1 :

[Formule chimique 1]

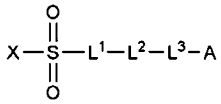

dans lequel, dans la Formule chimique 1,

X est un atome d'halogène ;
$L^1$ à $L^3$ sont sélectionnés indépendamment dans le groupe consistant en une liaison unique, *-O-*, *-C(=O)O-*, un groupe alkylène en C1 à C10 substitué ou non substitué, un groupe alcénylène en C2 à C10 substitué ou non substitué et un groupe alcynylène en C2 à C10 substitué ou non substitué,
à condition que
lorsque $L^1$ est *-O-* ou *-C(=O)O-*, $L^2$ ne soit pas *-O-*, et
lorsque $L^2$ est *-O-* ou *-C(=O)O-*, $L^3$ ne soit pas *-O-* ; et
A est un substituant représenté par la Formule chimique 2 ;

[Formule chimique 2]

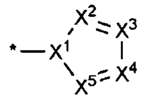

$X^1$ à $X^5$ sont un atome d'azote ou CR ;
deux à quatre de $X^1$ à $X^5$ sont des atomes d'azote ; et
R est chacun un atome d'hydrogène ou deux R adjacents sont combinés l'un avec l'autre pour former un cycle aromatique en C6 à C10 substitué ou non substitué,
dans lequel le terme « substitué » signifie qu'au moins un hydrogène est remplacé par le deutérium, un groupe halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alcoxy en C1 à C20, un groupe fluoroalkyle en C1 à C10 ou un groupe cyano.

**9.** Électrolyte pour la batterie rechargeable au lithium selon la revendication 8, dans lequel
l'additif pour l'électrolyte est inclus en une quantité de 0,1 partie en poids à 10 parties en poids sur la base d'un total de 100 parties en poids de l'électrolyte pour la batterie rechargeable au lithium.

**10.** Électrolyte pour la batterie rechargeable au lithium selon la revendication 8, dans lequel
le solvant organique non aqueux inclut un solvant à base de carbonate, à base d'ester, à base d'éther, à base de cétone, à base d'alcool ou aprotique.

**11.** Électrolyte pour la batterie rechargeable au lithium selon la revendication 10, dans lequel
le solvant organique non aqueux est un solvant à base de carbonate incluant du carbonate d'éthylène (EC), du carbonate d'éthylméthyle (EMC) et du carbonate de diméthyle (DMC).

**12.** Électrolyte pour la batterie rechargeable au lithium selon la revendication 8, dans lequel
le sel de lithium inclut un ou plusieurs sélectionnés parmi $LiPF_6$, LiBF4, $LiSbF_6$, $LiAsF_6$, $Li(FSO_2)_2N$ (bis(fluorosulfonyl)imide de lithium : LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (dans lequel x et y sont un nombre entier de 1 à 20), LiCl, LiI, $LiB(C_2O_4)_2$ (bis(oxalato) borate de lithium : LiBOB), LiDFOB (difluoro (oxalato) borate de lithium) et $Li[PF_2(C_2O_4)_2]$ (difluoro(bis oxalato) phosphate de lithium).

**13.** Électrolyte pour la batterie rechargeable au lithium selon la revendication 12, dans lequel
une concentration en sel de lithium est de 0,1 M à 2,0 M.

**14.** Batterie rechargeable au lithium (100), comportant :

une électrode positive (114) incluant un matériau actif d'électrode positive ;

une électrode négative (112) incluant un matériau actif d'électrode négative ; et
l'électrolyte pour la batterie rechargeable au lithium selon l'une quelconque de la revendication 8 à la revendication 13.

**15.** Batterie rechargeable au lithium selon la revendication 14, dans laquelle :
le matériau actif d'électrode positive inclut un matériau actif d'électrode positive à base de nickel.

FIG. 1

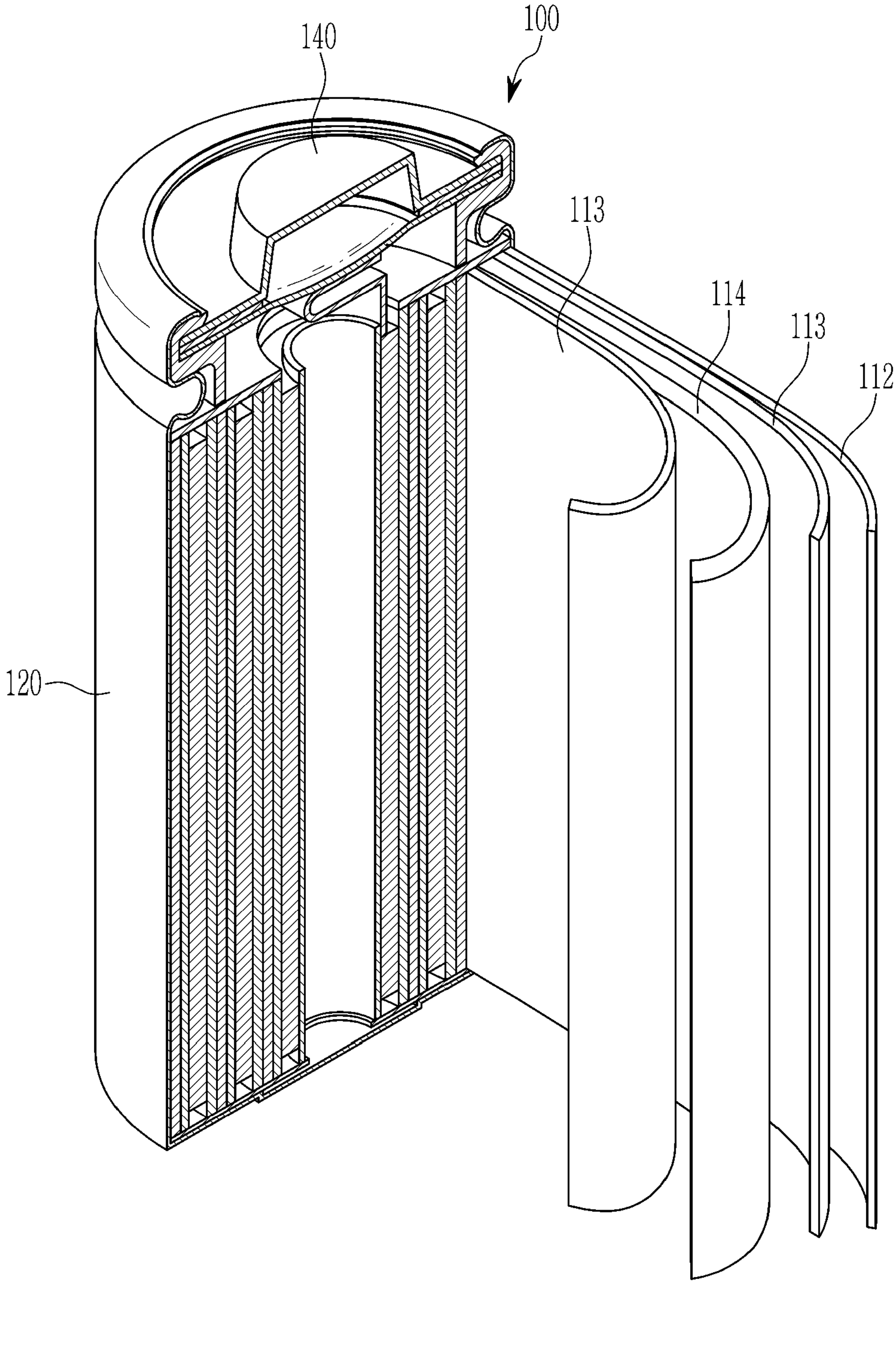

# FIG. 2

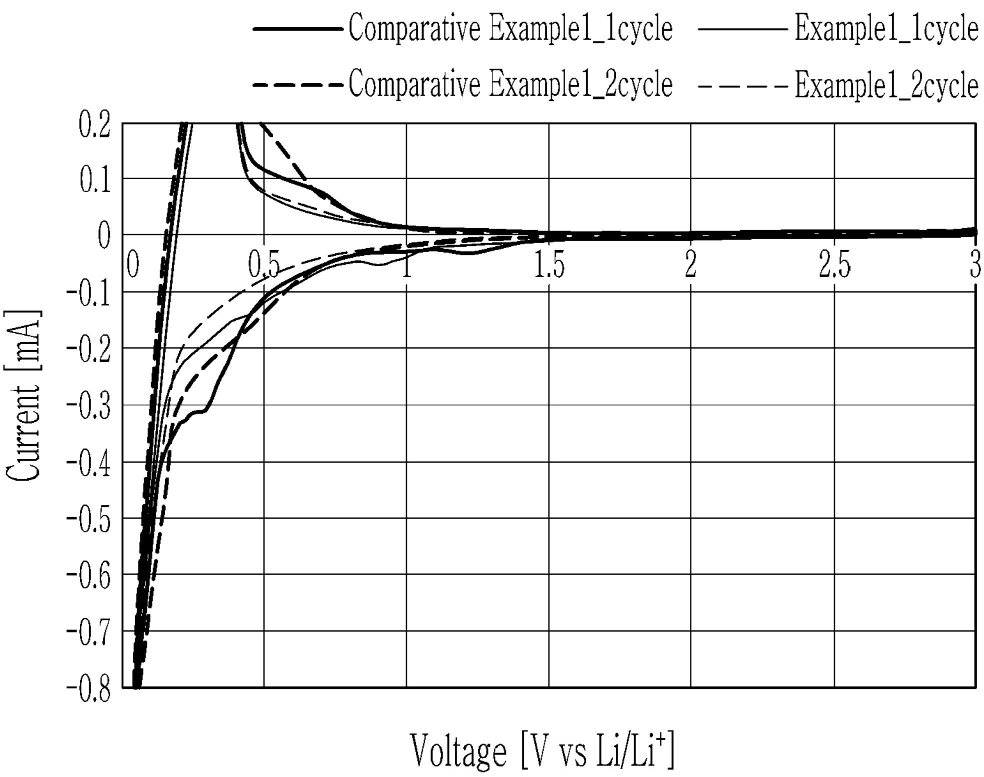
Comparative Example1_1cycle
Example1_1cycle
Comparative Example1_2cycle
Example1_2cycle
0.2
0.1
0
-0.1
-0.2
-0.3
-0.4
-0.5
-0.6
-0.7
-0.8
0
0.5
1
1.5
2
2.5
3
Current [mA]
Voltage [V vs Li/Li+]

# FIG. 3

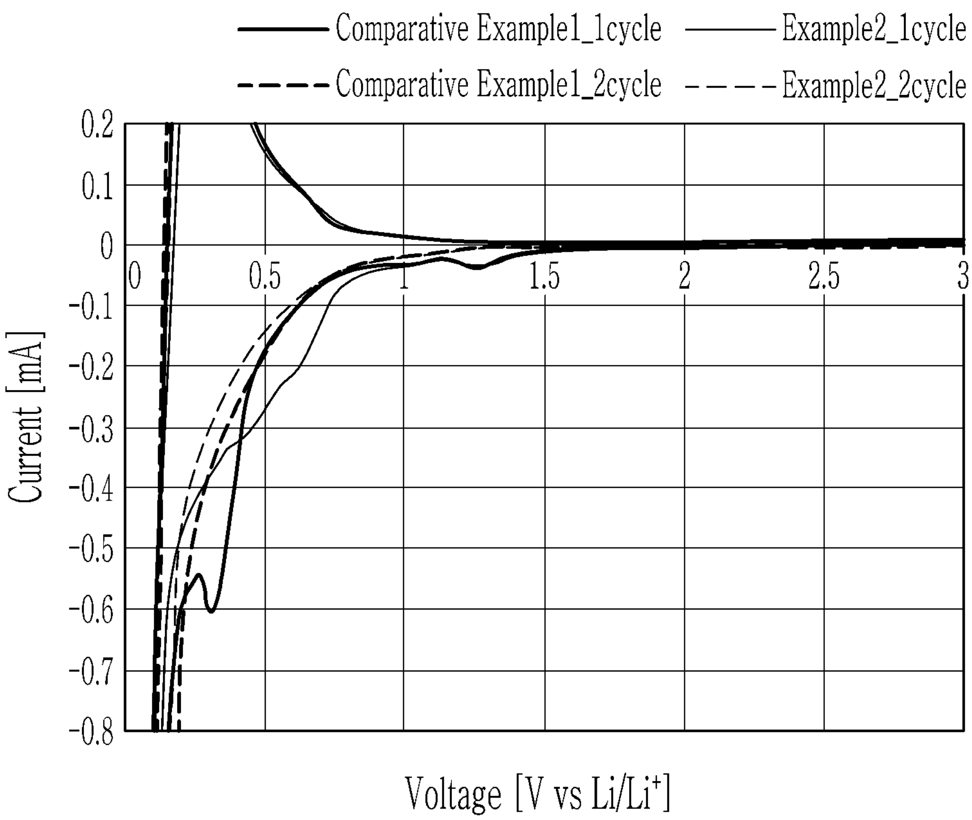
Comparative Example1_1cycle
Example2_1cycle
Comparative Example1_2cycle
Example2_2cycle
0.2
0.1
0
-0.1
-0.2
-0.3
-0.4
-0.5
-0.6
-0.7
-0.8
0
0.5
1
1.5
2
2.5
3
Current [mA]
Voltage [V vs Li/Li+]

# FIG. 4

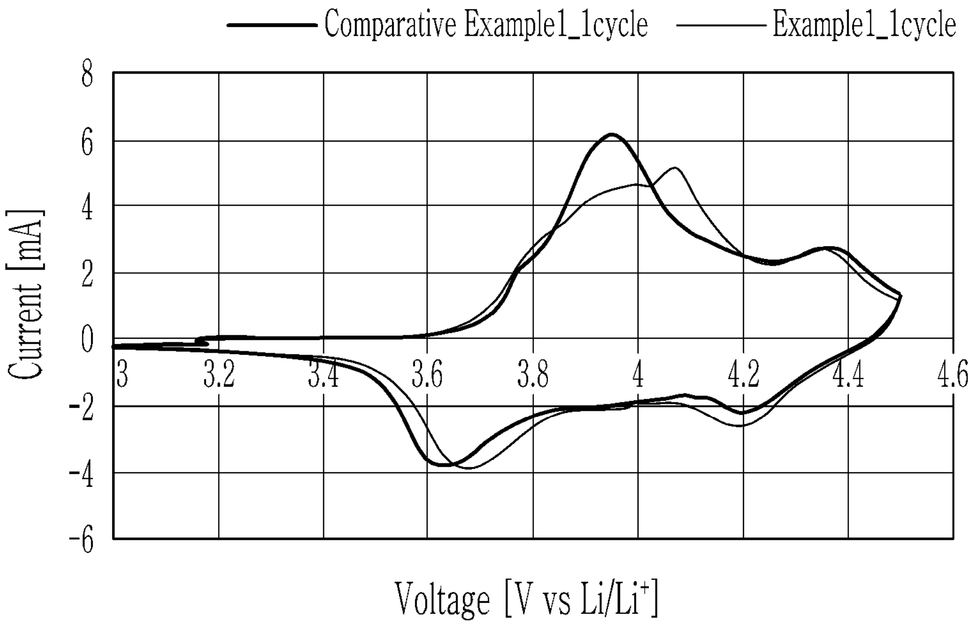
Comparative Example1_1cycle
Example1_1cycle
Current [mA]
8
6
4
2
0
-2
-4
-6
3
3.2
3.4
3.6
3.8
4
4.2
4.4
4.6
Voltage [V vs Li/Li+]

FIG. 5

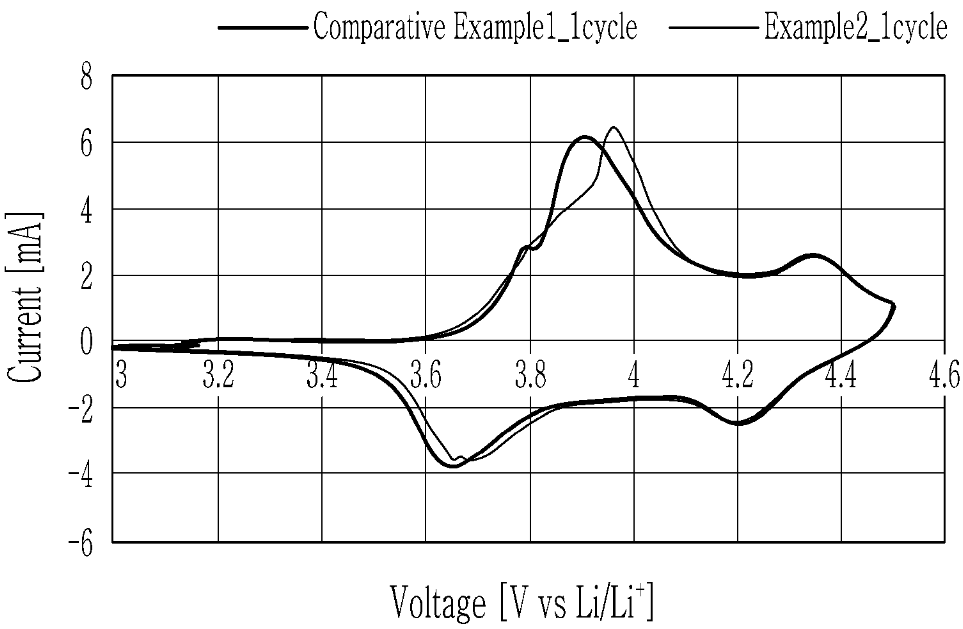
Comparative Example1_1cycle
Example2_1cycle
Current [mA]
8
6
4
2
0
-2
-4
-6
3
3.2
3.4
3.6
3.8
4
4.2
4.4
4.6
Voltage [V vs Li/Li+]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **FAIZ AHMED et al.** *Journal of Industrial and Engineering Chemistry*, 2019, vol. 78, 178-185
- *J. Org. Chem.*, 1979, vol. 44 (22)